# EUROPEAN PATENT APPLICATION

(11) **EP 4 354 631 A1**
(43) Date of publication of application: **17.04.2024**
(21) Application number: 23767092.2
(22) Date of filing: 03.03.2023
(51) Int. Cl.: H01M 50/50, H01M 50/559, H01M 50/538, H01M 50/179, H01M 50/562, H01M 50/528

(54) **CYLINDRICAL SECONDARY BATTERY CELL, AND BATTERY PACK AND VEHICLE COMPRISING SAME**

(30) Priority: 08.03.2022 KR 20220029614
(71) Applicant: LG Energy Solution, Ltd., Seoul 07335 (KR); LG Chem, Ltd., Seoul 07336 (KR)
(72) Inventor: KIM, Min-Woo, Daejeon 34122 (KR); SON, Bu-Won, Daejeon 34122 (KR); PARK, Jeong-Ho, Daejeon 34122 (KR); CHOI, Ik-Jin, Daejeon 34122 (KR)
(74) Representative: Goddar, Heinz J.
(86) International application number: PCT/KR2023/002982
(87) International publication number: WO 2023/171991

(57) **Abstract**

Disclosed is a cylindrical battery cell, which includes an electrode assembly having a first electrode tab with a first polarity and a second electrode tab with a second polarity; a battery can having an open portion formed at a lower end and a closed portion formed at an upper end, configured to accommodate the electrode assembly through the open portion, and electrically connected to the second electrode tab; a cell terminal electrically connected to the first electrode tab, exposed to an outside of the battery can through the closed portion of the battery can, and electrically insulated from the battery can; a first current collecting plate having a first surface and a second surface opposite to the first surface, wherein the first surface is coupled to the first electrode tab and the second surface is coupled to the cell terminal; and a terminal fastening member configured to mechanically fasten the cell terminal and the first current collecting plate.

## Description

### TECHNICAL FIELD

The present disclosure relates to a cylindrical battery cell, and a battery pack and a vehicle including the cylindrical battery cell. More particularly, the present disclosure relates to a cylindrical battery cell in which both a positive electrode terminal and a negative electrode terminal are adjacently disposed at one side of the cylindrical battery cell, without greatly deforming the structure of a conventional cylindrical battery cell, and a battery pack and a vehicle including the cylindrical battery cell.

The present application claims priority to Korean Patent Application No. 10-2022-0029614 filed on March 8, 2022 in the Republic of Korea, the disclosures of which are incorporated herein by reference.

### BACKGROUND ART

Secondary batteries that are easily applicable to various product groups and have electrical characteristics such as high energy density are universally applied not only to portable devices but also to electric vehicles (EVs) or hybrid electric vehicles (HEVs) driven by an electric drive source.

These secondary batteries are attracting attention as a new energy source to improve eco-friendliness and energy efficiency because they have the primary advantage that they can dramatically reduce the use of fossil fuels as well as the secondary advantage that no byproducts are generated from the use of energy.

Secondary batteries currently widely used in the art include lithium ion batteries, lithium polymer batteries, nickel cadmium batteries, nickel hydrogen batteries, nickel zinc batteries, and the like. A unit secondary battery cell has an operating voltage of about 2.5 V to 4.5V. Therefore, when a higher output voltage is required, a battery pack is configured by connecting a plurality of battery cells in series. In addition, a plurality of battery cells may be connected in parallel to form a battery pack according to the charge/discharge capacity required for the battery pack. Accordingly, the number of battery cells included in the battery pack and the form of electrical connection may be variously set according to the required output voltage and/or charge/discharge capacity.

Meanwhile, as a kind of secondary battery cell, there are known cylindrical, rectangular, and pouch-type battery cells. In the case of a cylindrical battery cell, a separator serving as an insulator is interposed between a positive electrode and a negative electrode, and they are wound to form an electrode assembly in the form of a jelly roll, which is inserted into a battery can together with an electrolyte to configure a battery. In addition, a strip-shaped electrode tab may be connected to an uncoated portion of each of the positive electrode and the negative electrode, and the electrode tab electrically connects the electrode assembly and an electrode terminal exposed to the outside. For reference, the positive electrode terminal is a cap plate of a sealing body that seals the open portion of the battery can, and the negative electrode terminal is the battery can.

However, according to the conventional cylindrical battery cell having such a structure, since current is concentrated in the strip-shaped electrode tab coupled to the uncoated portion of the positive electrode and/or the uncoated portion of the negative electrode, the current collection efficiency is not good due to large resistance and large heat generation.

For small cylindrical battery cells with a form factor of 18650 or 21700, resistance and heat are not a major issue. However, when the form factor is increased to apply the cylindrical battery cell to an electric vehicle, the cylindrical battery cell may ignite while a lot of heat is generated around the electrode tab during the rapid charging process. Therefore, it is required to develop a battery cell having an improved structure to solve the above problem.

In addition, the battery pack mounted on an electric vehicle includes a number of cylindrical battery cells. Accordingly, the inefficiency of the electrical wiring causes considerable inconvenience in the electric vehicle assembling process and the maintenance of the battery pack.

Meanwhile, as the cylindrical battery cell is recently applied to an electric vehicle, the form factor of the cylindrical battery cell is increasing. That is, the diameter and height of the cylindrical battery cell are increasing compared to the conventional cylindrical battery cells having a form factor of 18650, 21700, or the like. The increase in the form factor leads to an increased energy density, enhanced safety against thermal runaway, and improved cooling efficiency.

The energy density of the cylindrical battery cell may be further increased when the unnecessary space inside the battery can is minimized along with the increase of the form factor. Therefore, components used for electrical insulation between the electrode assembly and the battery can or components used for current collection from the positive electrode plate and the negative electrode plate need to be optimally designed to increase the capacity of the battery cell and lower the overall resistance of the battery cell.

### DISCLOSURE

### Technical Problem

The present disclosure is designed in consideration of the above problems, and therefore the present disclosure is directed to providing a cylindrical battery cell having a structure in which a positive electrode terminal and a negative electrode terminal are applied in the same direction.

The present disclosure is directed to securing a sufficient area for welding an electric connection component such as a bus bar with an electrode terminal of a cylindrical battery cell while manufacturing a battery pack by utilizing a wide area of a closed portion of a battery can as an electrode terminal, in a case where a plurality of cylindrical battery cells are to be electrically connected in one direction.

In another aspect, the present disclosure is directed to improving the processing efficiency in coupling a current collecting plate (first current collecting plate) and a cell terminal and to reducing the resistance on the coupling portion.

In another aspect, the present disclosure is directed to optimally designing so that the area occupied by the upper surface of the cell terminal (first electrode terminal) and the area occupied by the outer surface (second electrode terminal) of the closed portion may be sufficient for coupling with a bus bar.

In still another aspect, the present disclosure is directed to minimizing the resistance of the cylindrical battery cell by enlarging a contact area of the electrode assembly and the current collecting plate (first current collecting plate) and/or a contact area of the cell terminal and the current collecting plate (first current collecting plate) through improvement of the structure of the uncoated portion of the electrode assembly.

In still another aspect, the present disclosure is directed to improving the electrical connection structure between the current collecting plate (second current collecting plate) and the battery can to multiplex a current path and directed to maximizing the contact area to minimize the resistance of the cylindrical battery cell.

In still another aspect, the present disclosure is directed to reducing the current path by improving the electrical connection structure of the current collecting plate (second current collecting plate) and the battery can, thereby minimizing the resistance of the cylindrical battery cell.

In still another aspect, the present disclosure is directed to minimizing the dead space by improving the structure of the uncoated portion of the electrode assembly and/or optimally designing the height of the cell terminal and/or optimally designing the thickness of the battery can, thereby maximizing the energy density.

However, the technical object to be solved by the present disclosure is not limited to the above, and other objects not mentioned herein will be clearly understood by those skilled in the art from the following disclosure.

### Technical Solution

In one aspect of the present disclosure, there is provided a cylindrical battery cell, comprising: an electrode assembly having a first electrode tab with a first polarity and a second electrode tab with a second polarity; a battery can having an open portion formed at a lower end and a closed portion formed at an upper end, configured to accommodate the electrode assembly through the open portion, and electrically connected to the second electrode tab; a cell terminal electrically connected to the first electrode tab, exposed to an outside of the battery can through the closed portion of the battery can, and electrically insulated from the battery can; a first current collecting plate having a first surface and a second surface opposite to the first surface, wherein the first surface is coupled to the first electrode tab and the second surface is coupled to the cell terminal; and a terminal fastening member configured to mechanically fasten the cell terminal and the first current collecting plate.

The terminal fastening member may be press-fitted into the first current collecting plate and the cell terminal to fasten the cell terminal and the first current collecting plate.

The terminal fastening member may include a base portion; and a fastening portion that extends from the base portion toward the first current collecting plate and is press-fitted from the surface of the first current collecting plate into the first current collecting plate and the cell terminal.

The cell terminal and the first current collecting plate may contain aluminum.

The terminal fastening member may include boron steel containing 0.001 wt% to 0.008 wt% of boron.

At least a part of the first current collecting plate may be indented toward the inside of the cell terminal according to the press-fitting of the fastening portion at an outer side of the fastening portion and an inner side of the fastening portion.

A maximum diameter or maximum width of the terminal fastening member may be smaller than a diameter of a winding center hole of the electrode assembly.

The cylindrical battery cell may further comprise a cap plate configured to seal the open portion of the battery can.

The cap plate may not be electrically connected to the electrode assembly to have no polarity.

The cylindrical battery cell may further comprise a second current collecting plate configured to electrically connect the second electrode tab and the battery can.

The second current collecting plate may include a tab coupling portion coupled to the second electrode tab; and a can coupling portion electrically coupled to the battery can.

The can coupling portion may be electrically coupled to an inner surface of a sidewall of the battery can.

The battery can may have a beading portion formed by press-fitting a periphery of an outer circumference of the battery can at the open portion, and the can coupling portion may be electrically coupled to a lower surface of the beading portion.

In another aspect of the present disclosure, there is also provided a battery pack, comprising a plurality of cylindrical battery cells as above.

In another aspect of the present disclosure, there is also provided a vehicle, comprising the above battery pack.

### Advantageous Effects

According to one aspect of the present disclosure, it is possible to improve the processing efficiency in coupling a current collecting plate (first current collecting plate) and a cell terminal and reduce the resistance on the coupling portion.

According to another aspect of the present disclosure, by improving the electrode terminal structure of the cylindrical battery cell to increase the space efficiency in the battery can, it is possible to lower the internal resistance of the cylindrical battery cell and increase the energy density.

According to still another aspect of the present disclosure, by improving the structure of the electrode terminal of the cylindrical battery cell to enlarge the sectional area of the current path, it is possible to improve the problem of internal heat generated during rapid charging.

According to still another aspect of the present disclosure, an electrical wiring operation for serial and/or parallel connection of the cylindrical battery cells may be performed at one side of the cylindrical battery cells.

According to still another aspect of the present disclosure, in the case of electrically connecting a plurality of cylindrical battery cells in one direction, it is possible to utilize the wide surface of the closed portion of the battery can as an electrode terminal, thereby securing a sufficient area for welding electrical connection components such as bus bars for manufacturing a battery pack to electrode terminals of the cylindrical battery cells.

According to still another aspect of the present disclosure, it is possible to optimally design such that the area occupied by the upper surface of the cell terminal (first electrode terminal) and the area occupied by the outer surface (second electrode terminal) of the closed portion are sufficient for coupling with the bus bar.

According to still another aspect of the present disclosure, through improvement of the structure of the uncoated portion of the electrode assembly, the contact area of the electrode assembly and the current collecting plate (first current collecting plate) and/or the contact area of the cell terminal and the current collecting plate (first current collecting plate) may be enlarged, thereby minimizing the resistance of the cylindrical battery cell.

According to still another aspect of the present disclosure, the current path may be multiplexed through improvement of the electrical connection structure of the current collecting plate (second current collecting plate) and the battery can, and the contact area between these parts may be maximized to minimize the resistance of the cylindrical battery cell.

According to still another aspect of the present disclosure, it is possible to reduce the current path through the improvement of the electrical connection structure of the current collecting plate (second current collecting plate) and the battery can, thereby minimizing the resistance of the cylindrical battery cell.

According to still another aspect of the present disclosure, it is possible to minimize the dead space by improving the structure of the uncoated portion of the electrode assembly and/or optimally designing the height of the cell terminal and/or optimally designing the thickness of the battery can, thereby maximizing the energy density.

According to still another aspect of the present disclosure, it is possible to provide a battery pack manufactured using the cylindrical battery cell having an improved structure and a vehicle including the same.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing an appearance of a cylindrical battery cell according to an embodiment of the present disclosure.
FIG. 2 is a perspective view showing an electrode assembly in which an uncoated portion is bent according to an embodiment of the present disclosure.
FIG. 3 is a diagram showing an internal structure of the cylindrical battery cell according to an embodiment of the present disclosure.
FIG. 4 is a partial cross-sectional view showing an upper structure of the cylindrical battery cell according to an embodiment of the present disclosure and a partially enlarged view showing a region to which a fastening member is applied.
FIG. 5 is a cross-sectional view showing the cylindrical battery cell according to an embodiment of the present disclosure to explain a process of coupling a first current collecting plate and a cell terminal using a fastening member.
FIG. 6 is a conceptual diagram for illustrating the process of coupling the first current collecting plate and the cell terminal using a fastening member step by step.
FIG. 7 is a diagram showing a first current collecting plate according to an embodiment of the present disclosure.
FIG. 8 is a partial cross-sectional view showing a lower structure of the cylindrical battery cell according to an embodiment of the present disclosure.
FIG. 9 is a plan view showing a lower surface of the cylindrical battery cell according to an embodiment of the present disclosure.
FIG. 10 is a top plan view showing a state in which a plurality of cylindrical battery cells according to an embodiment of the present disclosure are connected in series and parallel using bus bars.
FIG. 11 is a diagram showing a schematic configuration of a battery pack including the cylindrical battery cells according to an embodiment of the present disclosure.
FIG. 12 is a diagram showing a schematic configuration of a vehicle including the battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In addition, in order to help the understanding of the present disclosure, the accompanying drawings are not drawn to scale, but dimensions of some components may be exaggerated. Also, the same reference signs may be assigned to the same components in different embodiments.

When it is explained that two objects are identical, this means that these objects are 'substantially identical'. Accordingly, the substantially identical objects may include deviations considered low in the art, for example, deviations within 5%. Also, when it is explained that certain parameters are uniform in a predetermined region, this may mean that the parameters are uniform in terms of an average.

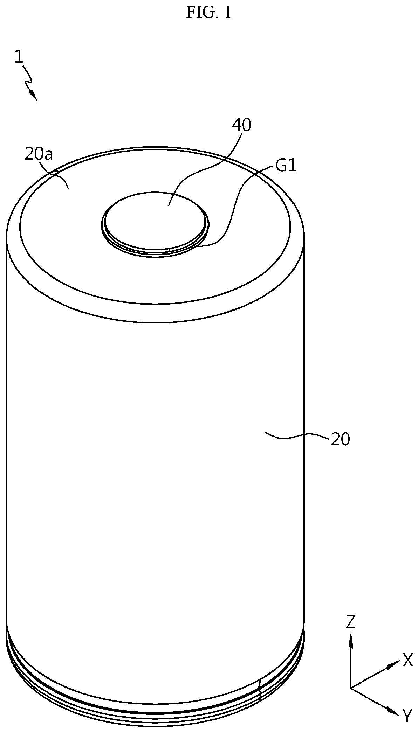

Referring to FIGS. 1 to 4, a cylindrical battery cell 1 according to the an embodiment of the present disclosure includes an electrode assembly 10, a battery can 20, a cell terminal 40, a first current collecting plate 50, and a terminal fastening member 60. The cylindrical battery cell 1 may further include a cap plate 30 and/or an insulator 70 and/or an insulation gasket G1 and/or a sealing gasket G2 and/or a second current collecting plate 80 in addition to the above components.

The electrode assembly 10 has a first electrode tab 11 with a first polarity and a second electrode tab 12 with a second polarity. The first electrode tab 11 and the second electrode tab 12 may have shapes extending in opposite directions along the height direction (parallel to the Z-axis) of the electrode assembly 10. For example, the first electrode tab 11 may extend upward and the second electrode tab 12 may extend downward. That is, the first electrode tab 11 may extend toward a closed portion located on a side opposite to an open portion formed at the lower end of the battery can 20, and the second electrode tab 12 may extend toward the open portion of the battery can 20.

The electrode assembly 10 includes a first electrode having a first polarity, a second electrode having a second polarity, and a separator interposed between the first electrode and the second electrode. The first electrode is a positive electrode or a negative electrode, and the second electrode corresponds to an electrode having a polarity opposite to that of the first electrode.

The electrode assembly 10 may have, for example, a jelly-roll structure. That is, the electrode assembly 10 may be manufactured by preparing a stack that is formed by stacking a first electrode and a second electrode having approximately a sheet shape at least once with a separator interposed therebetween, and winding the stack based on the core. A winding center hole C may be formed in the core of the electrode assembly 10 wound as above. In this case, an additional separator may be provided on an outer circumferential surface of the electrode assembly 10 for insulation from the battery can 20. The jelly-roll structure known in the art can be applied to the present disclosure without limitations.

The first electrode includes a first electrode current collector and a first electrode active material coated on one surface or both surfaces of the first electrode current collector. At one end of the first electrode current collector in a width direction (parallel to the Z-axis), there is a first uncoated portion that is not coated with the first electrode active material. Hereinafter, the first uncoated portion functioning as an electrode tab will be called a first electrode tab 11. The first electrode tab 11 is provided at an upper portion of the electrode assembly 10 accommodated in the battery can 20 in a height direction (parallel to the Z-axis). That is, the first electrode current collector has a first uncoated portion, namely a portion not coated with an active material layer, formed at one end in the width direction (parallel to the Z-axis) and extending along the length direction (parallel to the X-axis), and the first uncoated portion is exposed to the outside of the separator. The first uncoated portion is used as an electrode tab by itself. The first electrode tab 11 may be, for example, a positive electrode tab.

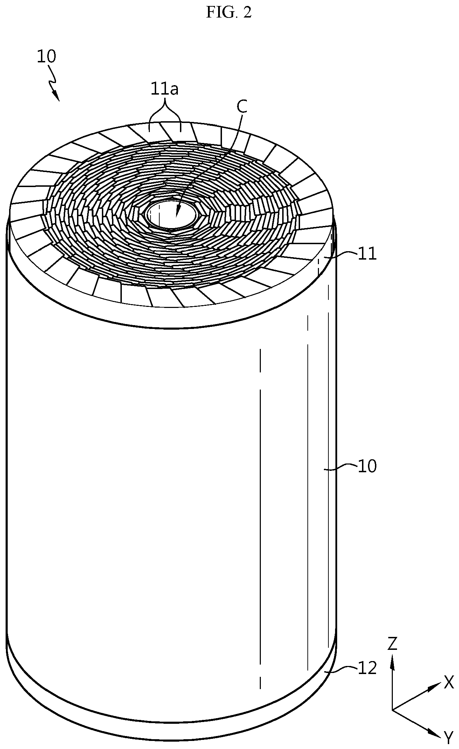

Meanwhile, referring to the exemplary form of the electrode assembly 10 of the present disclosure as shown in FIG. 2, at least a part of the first electrode tab 11 may include a plurality of segments 11a divided along a winding direction of the electrode assembly 10. In this case, the plurality of segments 11a may be bent along a radial direction of the electrode assembly 10. The plurality of bent segments 11a may be overlapped in multiple layers. In this case, a first tab coupling portion 52 of the first current collecting plate 50, explained later, may be coupled to a region in which the plurality of segments 11a are overlapped in multiple layers. Meanwhile, the electrode assembly 10 may include a stack number uniform region that is a region in which the number of overlapping layers of the segments 11a of the first electrode tab 11 is kept constant at approximately a maximum value along the radial direction of the electrode assembly 10. In this region, since the number of overlapping layers is kept to the maximum, it may be advantageous that the first current collecting plate 50, explained later, and the first electrode tab 11 are welded in this region. This is, for example, in the case of applying laser welding, to prevent the laser beam from passing through the first electrode tab 11 and damaging the electrode assembly 10 when the output of the laser is increased, in order to improve welding quality. In addition, this is to effectively prevent foreign substances such as welding spatters from flowing into the electrode assembly 10.

The second electrode includes a second electrode current collector and a second electrode active material coated on one surface or both surfaces of the second electrode current collector. At the other end of the second electrode current collector in the width direction (parallel to the Z-axis), there is a second uncoated portion that is not coated with the second electrode active material. Hereinafter, the second uncoated portion functioning as an electrode tab will be called a second electrode tab 12. The second electrode tab 12 is provided at a lower portion of the electrode assembly 10 accommodated in the battery can 20 in the height direction (parallel to the Z-axis). That is, the second electrode current collector has a second uncoated portion, namely a portion not coated with an active material layer, formed at the other end in the width direction (parallel to the Z-axis) and extending along the length direction (parallel to the X-axis), and the second uncoated portion is exposed to the outside of the separator. The second electrode tab 12 may be, for example, a negative electrode tab.

Meanwhile, similar to the first electrode tab 11 described above, at least a part of the second electrode tab 12 may include a plurality of segments 11a divided along the winding direction of the electrode assembly 10. In this case, the plurality of segments 11a may be bent along the radial direction of the electrode assembly 10. The plurality of bent segments 11a may be overlapped in multiple layers. In this case, a second tab coupling portion 82 of the second current collecting plate 80, explained later, may be coupled to a region in which the plurality of segments 11a are overlapped in multiple layers. Meanwhile, the electrode assembly 10 may include a stack number uniform region that is a region in which the number of overlapping layers of the segments 11a of the second electrode tab 12 is kept constant at approximately a maximum vale along the radial direction of the electrode assembly 10. In this region, since the number of overlapping layers is kept to the maximum, it may be advantageous that the second current collecting plate 80, explained later, and the second electrode tab 12 are welded within this region. This is, for example, in the case of applying laser welding, to prevent the laser beam from passing through the second electrode tab 12 and damaging the electrode assembly 10 when the output of the laser is increased, in order to improve welding quality. In addition, this is to effectively prevent foreign substances such as welding spatters from flowing into the electrode assembly 10.

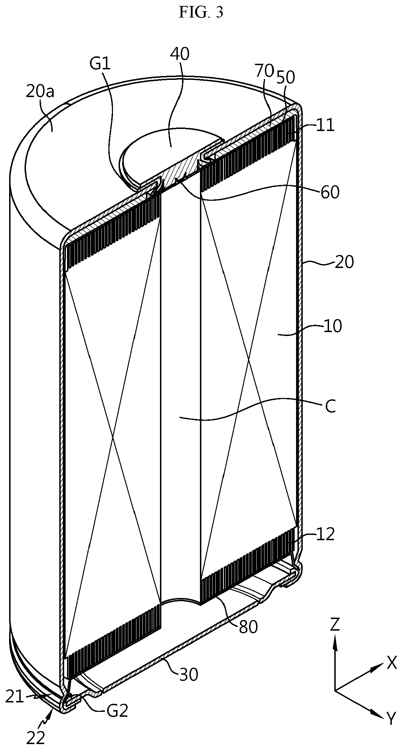

Referring to FIGS. 3, 4 and 8, the battery can 20 is a substantially cylindrical container having an open portion formed at a lower side and having an empty space therein, and is made of, for example, a conductive material such as metal. As the material of the battery can 20, for example, steel, stainless steel, or nickel-plated iron may be applied. If an iron-based material having excellent rigidity is used as above, it may be very advantageous in terms of rigidity of the battery can 20. In particular, in the process of coupling the cell terminal 40 and the first current collecting plate 50 using the terminal fastening member 60, explained later, it is necessary to ensure sufficient rigidity of the battery can 20 to prevent shape deformation of the battery can 20. However, the material of the battery can 20 is not limited thereto, and any metal material having conductivity can be used. The battery can 20 accommodates the electrode assembly 10 through an open portion formed at a lower side, and also accommodates an electrolyte together.

The battery can 20 is electrically connected to the electrode assembly 10. The battery can 20 may be electrically coupled to, for example, the second electrode tab 12 of the electrode assembly 10. In this case, the battery can 20 has the same second polarity as the second electrode tab 12.

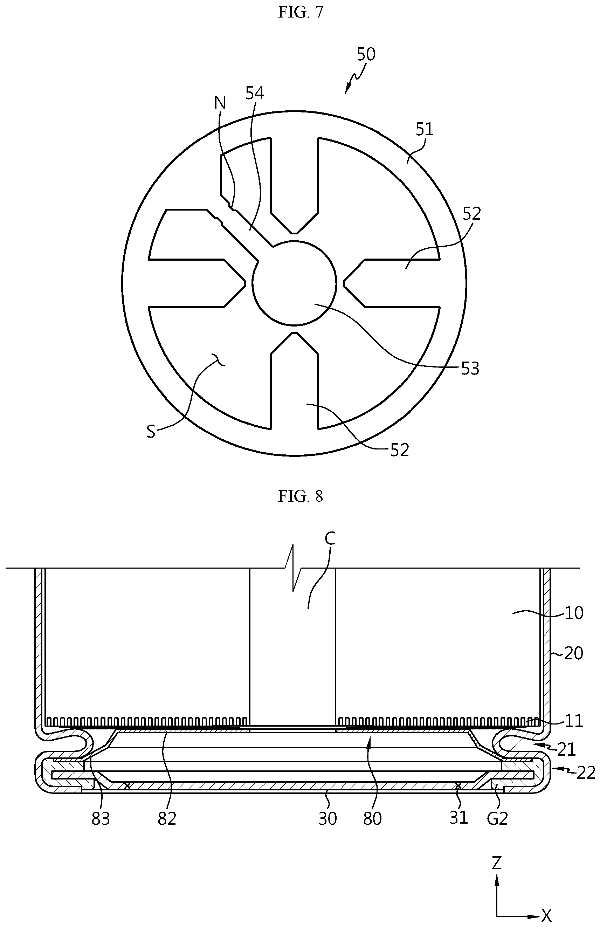

The battery can 20 may have a beading portion 21 formed near a lower end thereof. The beading portion 21 is formed by press-fitting the periphery of the outer circumference of the battery can 20 at the open portion of the battery can 20. Thus, in the region where the beading portion 21 is formed, the battery can 20 has a shape indented to a predetermined depth. The beading portion 21 prevents the electrode assembly 10, which may have a size approximately corresponding to the inner diameter of the battery can 20, from escaping through the open portion formed at the lower end of the battery can 20, and may function as a support on which the cap plate 30 is seated. Referring to FIG. 8, on the inner surface of the battery can 20, the upper surface of the beading portion 21 may function as a support surface on which the electrode assembly 10 may be seated. In addition, on the inner surface of the battery can 20, the lower surface of the beading portion 21 may function as a support surface on which the cap plate 30 may be seated. Meanwhile, on the inner surface of the battery can 20, the lower surface of the beading portion 21 may function as a support surface on which the can coupling portion 83 of the second current collecting plate 80, explained later, may be seated.

The battery can 20 may include a crimping portion 22 formed below the beading portion 21. The crimping portion 22 has a shape extending downward from the beading portion 21. The crimping portion 22 has an extended and bent shape to surround an outer circumference of the cap plate 30 disposed below the beading portion 21 and a part of the lower surface of the cap plate 30. The crimping portion 22 may fix the sealing gasket G2 in addition to the cap plate 30.

Referring to FIGS. 3 and 8, the cap plate 30 may be made of, for example, a metal material to ensure rigidity. The cap plate 30 seals the open portion formed at a lower end of the battery can 20. The lower surface of the cap plate 30 functions as the lower surface of the cylindrical battery cell 1. In the cylindrical battery cell 1 of the present disclosure, the cap plate 30 may not have a polarity even if it is made of a conductive metal material. The cap plate 30 having no polarity may mean that the cap plate 30 is not electrically connected to the electrode assembly 10. If the cap plate 30 is not electrically connected to the electrode assembly 10 as above, the cap plate 30 does not function as a positive electrode terminal or a negative electrode terminal. That is, in the present disclosure, the cap plate 30 does not need to be electrically connected to the electrode assembly 10 and the battery can 20, and its material does not necessarily have to be a conductive metal.

If the battery can 20 of the present disclosure includes the beading portion 21, the cap plate 30 may be supported by the lower surface of the beading portion 21 formed on the battery can 20. In addition, if the battery can 20 of the present disclosure includes the crimping portion 22, the cap plate 30 is fixed by the crimping portion 22. That is, the upper surface of the cap plate 30 may be supported by the beading portion 21, and the outer circumferential surface and the lower surface of the cap plate 30 may be supported by the beading portion 21. The sealing gasket S2 may be interposed between the cap plate 30 and the crimping portion 22 of the battery can 20 to secure the airtightness of the battery can 20. Meanwhile, as described above, the battery can 20 of the present disclosure may not include the beading portion 21 and/or the crimping portion 22, and in this case, the sealing gasket G2 may be interposed between a fixing structure provided at a side of the battery can 20 having the open portion and the cap plate 30 in order to secure the airtightness of the battery can 20.

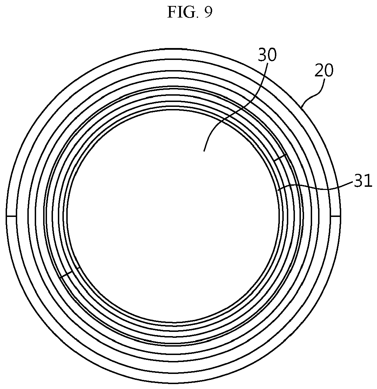

Referring to FIGS. 8 and 9, the cap plate 30 may further include a venting portion 31 formed to prevent an inner pressure from increasing over a preset value due to a gas generated inside the battery can 20. The venting portion 31 corresponds to a region having a smaller thickness compared to the peripheral region of the cap plate 30. The venting portion 31 is structurally weak compared to the peripheral region. Accordingly, if an abnormal situation occurs in the cylindrical battery cell 1 so that the inner pressure of the battery can 20 increases over a certain level, the venting portion 31 is ruptured so that the gas generated inside the battery can 20 is discharged. The venting portion 31 may be formed by reducing the thickness of the battery can 20 partially, for example by notching any one surface or both surfaces of the cap plate 30.

The cylindrical battery cell 1 according to an embodiment of the present disclosure has a structure in which both a positive electrode terminal and a negative electrode terminal are provided at an upper portion thereof as will be described later, and thus the upper structure is more complicated than the lower structure. Accordingly, the venting portion 31 may be formed at the cap plate 30 that seals the open portion of the battery can 20 at the lower end of the cylindrical battery cell 1 in order to smoothly discharge the gas generated inside the battery can 20. As shown in FIG. 7, the lower end of the cap plate 30 is preferably located higher than the lower end of the battery can 20. In this case, even if the lower end of the battery can 20 touches the ground or the bottom surface of the housing for a module or pack configuration, the cap plate 30 does not touch the ground or the bottom surface of the housing for the module or pack configuration. Accordingly, it is possible to prevent the pressure required to rupture the venting portion 31 from being different from a design value due to the weight of the cylindrical battery cell 1, thereby securing smooth rupture of the venting portion 31.

Meanwhile, the venting portion 31 may have a shape extending continuously or discontinuously to surround the central region of the cap plate 30 as shown in FIGS. 8 and 9. In this case, a greater distance is advantageous from the center of the cap plate 30 to the venting portion 31 in terms of ease of rupture of the venting portion 31 due to the increase of internal pressure. This is because, when the same internal pressure is applied, as the distance from the center point of the cap plate 30 to the venting portion 31 is greater, the force acting on the venting portion 31 increases further to secure easy rupture. In addition, a greater distance is also advantageous from the center point of the cap plate 30 to the venting portion 31 in terms of the smooth discharge of the venting gas since the area opened by venting is increased. From this point of view, the venting portion 31 may be advantageously formed along an edge circumference of the central region having an approximately flat shape and protruding downward (in a lower direction based on FIG. 8), in the entire region of the cap plate 30.

FIGS. 8 and 9 depict a case in which the venting portion 31 is continuously formed in an approximately circular shape on the cap plate 30, but the present disclosure is not limited thereto. The venting portion 31 may have an approximately elliptical shape or other geometric shape that is formed to include the center point of the cap plate 30 therein. In addition, the venting portion 31 may be formed discontinuously instead of continuously.

Referring to FIGS. 1 to 4, the cell terminal 40 is electrically connected to the first electrode tab 11. The electrical connection between the first electrode tab 11 and the cell terminal 40 is made through the first current collecting plate 50. The cell terminal 40 may be exposed to an outside of the battery can 20 through the closed portion of the battery can 20.

The cell terminal 40 is made of a conductive metal material. The cell terminal 40 may contain aluminum (Al). Preferably, the material of the cell terminal 40 may be aluminum. When the cell terminal 40 is made of aluminum, riveting and/or press-fitting using the terminal fastening member 60 to fix the cell terminal 40 on the inner surface of the closed portion of the battery can 20 may be facilitated. When the material of the cell terminal 40 is aluminum, 10-series aluminum may be applied to maximize the ease of processing and minimize electrical resistance.

The cell terminal 40 has a first polarity, identical to the first electrode tab 11 of the electrode assembly 10. Accordingly, the cell terminal 40 may function as a first electrode terminal in the cylindrical battery cell 1 of the present disclosure. If the cell terminal 40 has the first polarity like this, the cell terminal 40 is electrically insulated from the battery can 20 with the second polarity. The electrical insulation between the cell terminal 40 and the battery can 20 may be realized in various ways. For example, the insulation may be realized by interposing an insulation gasket G1 between the cell terminal 40 and the battery can 20. Alternatively, the insulation may be realized by forming an insulating coating layer on a portion of the cell terminal 40. Alternatively, any method of structurally fixing the cell terminal 40 securely such that the cell terminal 40 and the battery can 20 cannot contact each other may be applied. Alternatively, some of the above methods may be applied together.

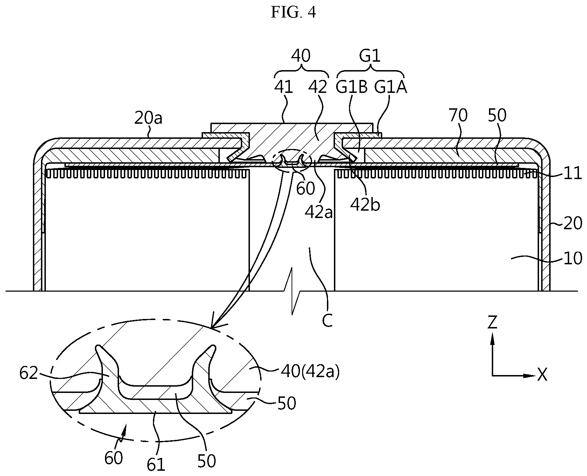

Referring to FIG. 4, the cell terminal 40 includes a terminal exposing portion 41 and a terminal insert portion 42. The terminal insert portion 42 may include an electric connection portion 42a and a flange portion 42b. The terminal exposing portion 41 is exposed out of the battery can 20. The terminal exposing portion 41 may be located approximately at the center of the closed portion of the battery can 20. The maximum width of the terminal exposing portion 41 may be formed larger than the maximum width of the hole formed in the battery can 20 for the insertion of the cell terminal 40. The terminal insert portion 42 may pass through a substantially central portion of the closed portion of the battery can 20, and the electric connection portion 42a of the terminal insert portion 42 may be electrically connected to the first electrode tab 11. A bottom surface of the cell terminal 40, namely a bottom surface of the electric connection portion 42a, may at least partially have a substantially flat shape substantially parallel to the closed portion of the battery can 20. If a part or all of the bottom surface of the cell terminal 40 has a substantially flat shape as above, the contact area between the first current collecting plate 50 and the cell terminal 40 applied for electrical connection between the cell terminal 40 and the first electrode tab 11 may be maximized, and thus contact resistance may be minimized. If the contact area is maximized at the electrical connection portion between the electrode assembly 10 and the cell terminal 40 and thus the contact resistance is minimized as above, when a large amount of current flows due to rapid charging, a smooth flow of current may be ensured at the coupling portion between the cell terminal 40 and the current collecting plate 50, thereby shortening the charging time and reducing the amount of heat generated.

The flange portion 42b of the terminal insert portion 42 is formed at the periphery of the electric connection portion 42a, and may be riveted on the inner surface of the closed portion of the battery can 20. That is, the flange portion 42b of the terminal insert portion 42 may have a shape curved toward the inner surface of the closed portion of the battery can 20. Therefore, the maximum width of the terminal insert portion 42 after the riveting process for fixing the cell terminal 40 is performed may be formed larger than the maximum width of the hole formed in the battery can 20 so that the terminal insert portion 42 passes therethrough.

The electric connection portion 42a of the terminal insert portion 42 may be coupled to the first current collecting plate 50, explained later. The electric connection portion 42a of the terminal insert portion 42 may have, for example, a substantially cylindrical shape. Of course, the shape of the electric connection portion 42a of the terminal insert portion 42 is not limited thereto. The electric connection portion 42a of the terminal insert portion 42 may have various shapes, such as, for example, a cylindrical shape having an elliptical cross-section, a square pillar shape, a hexagonal pillar shape, an octagonal pillar shape, or the like. The bottom surface of the electric connection portion 42a of the terminal insert portion 42 may be formed to be substantially flat at least partially.

The insulation gasket G1 is interposed between the battery can 20 and the cell terminal 40 to prevent the battery can 20 and the cell terminal 40 having opposite polarities from contacting each other. Accordingly, the outer surface 20a of the closed portion of the battery can 20 having an approximately flat shape may function as a second electrode terminal of the cylindrical battery cell 1.

The insulation gasket G1 includes a gasket exposing portion G1A and a gasket insert portion G1B. The gasket exposing portion G1A is interposed between the terminal exposing portion 41 of the cell terminal 40 and the battery can 20. The gasket exposing portion G1A may extend longer than the terminal exposing portion 41along a direction approximately parallel to the closed portion of the battery can 20 in order to maximize the insulating property. By doing so, a part of the gasket exposing portion G1A may be exposed out of the terminal exposing portion 41 when the cylindrical battery cell 51 is viewed from the above. The gasket insert portion G1A (→ G1B) is interposed between the terminal insert portion 42 of the cell terminal 40 and the battery can 20. When riveting is performed using the flange portion 42b of the terminal insert portion 42, the gasket insert portion G1B may be deformed together to come into close contact with the inner surface of the closed portion of the battery can 20. The insulation gasket G1 may be made of, for example, a resin material having insulation and elasticity.

In the case where the insulation gasket G1 is made of a resin material, the insulation gasket G1 may be coupled to the battery can 20 and the cell terminal 40 by thermal fusion. In this case, the airtightness at the coupling interface between the insulation gasket G1 and the cell terminal 40 and at the coupling interface between the insulation gasket G1 and the battery can 20 may be strengthened. Meanwhile, although not shown in the drawings, the gasket exposing portion G1A of the insulation gasket G1 may have an extended form to cover the outer circumference of the terminal exposing portion 41, or may have an extended form to cover not only the outer circumference of the terminal exposing portion 41 but also a part of the upper surface. In the case where the gasket exposing portion G1A of the insulation gasket G1 has an extended form to cover the outer circumference and even a part of the upper surface of the terminal exposing portion 41, the cell terminal 40 may be integrally formed with the insulation gasket G1 by insert injection, for example.

In the entire area of the upper surface of the battery can 20, viewed from a location above the cylindrical battery cell 1, the entire area except for the area occupied by the cell terminal 40 and the insulation gasket G1, namely the area occupied by the outer surface 20a of the closed portion of the battery can 20, corresponds to the second electrode terminal having the opposite polarity to the cell terminal (first electrode terminal) 40.

Referring to FIGS. 3 and 4, the first current collecting plate 50 is coupled to an upper portion of the electrode assembly 10. In addition, the first current collecting plate 50 is coupled to the cell terminal 40. More specifically, the first current collecting plate 50 has a first surface and a second surface opposite to the second surface, wherein the first surface is coupled to the first electrode tab 11 and the second surface is coupled to the cell terminal 40. Accordingly, the first current collecting plate 50 electrically connects the first electrode tab 11 of the electrode assembly 10 and the cell terminal 40. The first current collecting plate 50 is made of a conductive metal material and is coupled to the first electrode tab 11. When the first electrode tab 11 is a positive electrode tab, the first current collecting plate 50 may include, for example, aluminum. Preferably, the first current collecting plate 50 may be made of aluminum.

A flat portion approximately parallel to the inner surface of the closed portion of the battery can 20 may be formed in at least part of the bottom surface of the cell terminal 40, namely the bottom surface of the electric connection portion 42a of the terminal insert portion 42, and the first current collecting plate 50 is coupled to the flat portion.

The first current collecting plate 50 is coupled to an end of the first electrode tab 11. The coupling between the first electrode tab 11 and the first current collecting plate 50 may be performed, for example, by laser welding. The laser welding may be performed by partially melting a base material of the first current collecting plate 50, or may be performed in a state where a solder for welding is interposed between the first current collecting plate 50 and the first electrode tab 11. In this case, the solder preferably has a lower melting point than the first current collecting plate 50 and the first electrode tab 11.

The first current collecting plate 50 may be coupled to a coupling surface of the first electrode tab 11, which is formed by bending an end of the first electrode tab 11 in a direction parallel to the first current collecting plate 50. The first electrode tab 11 may be bent along the radial direction of the electrode assembly 10. The bending direction of the first electrode tab 11 may be, for example, a direction toward the winding center, namely the core, of the electrode assembly 10. If the first electrode tab 11 has a bent shape as above, the space occupied by the first electrode tab 11 may be reduced, thereby improving energy density. In addition, if the first electrode tab 11 has a bent shape as above, as the coupling area between the first electrode tab 11 and the first current collecting plate 50 increases, the coupling force may be improved and the resistance may be reduced. Meanwhile, in the case where the end of the first electrode tab 11 has a bent shape and the first current collecting plate 50 is coupled to the coupling surface formed by bending the first electrode tab 11, the first current collecting plate 50 and the first electrode tab 11 may be advantageously coupled within the stack number uniform region as described above.

Next, an exemplary form of the first current collecting plate 50 of the present disclosure will be described with reference to FIG. 7 along with FIGS. 3 and 4. Referring to FIG. 7 along with FIGS. 3 and 4, the first current collecting plate 50 applied to the present disclosure may include a first tab coupling portion 52 coupled to the first electrode tab 11 and a terminal coupling portion 53 coupled to the cell terminal 40. The first current collecting plate 50 may further include an edge portion 51.

The edge portion 51 is disposed on the electrode assembly 10. The edge portion 51 may have a substantially rim shape having an empty space S formed therein. In the drawings of the present disclosure, only a case in which the edge portion 51 has a substantially circular rim shape is illustrated, but the present disclosure is not limited thereto. The edge portion 51 may have a substantially rectangular rim shape, a hexagonal rim shape, an octagonal rim shape, or other rim shapes, unlike the illustrated one.

The terminal coupling portion 53 may have, for example, a diameter substantially equal to or greater than the diameter of the flat portion formed on the bottom surface of the cell terminal 40 in order to secure an area for coupling with the flat portion formed on the bottom surface of the cell terminal 40. However, the area of the terminal coupling portion 53 is not limited thereto.

The first tab coupling portion 52 extends inward from the edge portion 51 and is coupled to the first electrode tab 11. The terminal coupling portion 53 is spaced apart from the first tab coupling portion 52 and is located inside the edge portion 51. As explained later, the terminal coupling portion 53 may be coupled to the cell terminal 40 by a mechanical fastening method. The terminal coupling portion 53 may be located approximately at the center of the inner space, for example, surrounded by the edge portion 51. The terminal coupling portion 53 may be provided at a location corresponding to the winding center hole C formed at the core of the electrode assembly 10. The terminal coupling portion 53 may be configured to cover the winding center hole C of the electrode assembly 10 so that the winding center hole C of the electrode assembly 10 is not exposed out of the terminal coupling portion 53. If the winding center hole C of the electrode assembly 10 is covered as above, it is possible to prevent that the separator positioned inside the hole is damaged due to the flow rate of the electrolyte passing through the hole and thus the electrode is leaked. To this end, the terminal coupling portion 53 may have a larger diameter or width than the winding center hole C of the electrode assembly 10.

The first tab coupling portion 52 and the terminal coupling portion 53 may not be directly connected, but may be disposed to be spaced apart from each other and indirectly connected by the edge portion 51. Since the first current collecting plate 50 has a structure in which the first tab coupling portion 52 and the terminal coupling portion 53 are not directly connected to each other but are connected only indirectly through the edge portion 51 as above, thereby dispersing shocks. That is, when shock and/or vibration occurs at the cylindrical battery cell 1 of the present disclosure, it is possible to disperse the shock applied to the coupling portion between the first tab coupling portion 52 and the first electrode tab 11 and the coupling portion between the terminal coupling portion 53 and the cell terminal 40. In the drawings of the present disclosure, only a case in which four first tab coupling portions 52 are provided is illustrated, but the present disclosure is not limited thereto. The number of the first tab coupling portions 52 may be variously determined in consideration of manufacturing difficulty according to the complexity of the shape, electric resistance, the space inside the edge portion 51 considering electrolyte impregnation, and the like.

The first current collecting plate 50 may further include a bridge portion 54 extending inward from the edge portion 51 and connected to the terminal coupling portion 53. The bridge portion 54 may include a current blocking portion N formed to partially reduce a cross-sectional area of the bridge portion 54. The cross-sectional area of the current blocking portion N may be adjusted by, for example, partially reducing the width and/or thickness of the bridge portion 54. When the current blocking portion N is provided, electrical resistance increases in the region where the current blocking portion N is formed, thereby enabling rapid current blocking when overcurrent occurs. The current blocking portion N may have a shape such as a notch, a groove, or a hole formed on at least one surface of the bridge portion 54.

Meanwhile, the current blocking portion N is preferably provided in a region corresponding to the stack number uniform region of the electrode assembly 10 described above in order to prevent problems such as internal short circuits from occurring due to foreign matter generated during rupture and flowing into the electrode assembly 10. This is because the number of overlapping layers of the segments 11a (see FIG. 2) of the first electrode tab 11 is maintained at a maximum level in this region, and thus the overlapping segments may function as a mask. For example, the current blocking portion N may be provided in a region substantially corresponding to the central portion of the electrode assembly 10 in the radial direction.

The first tab coupling portion 52 may be provided in plurality. The plurality of first tab coupling portions 52 may be disposed at substantially equal intervals from each other along an extending direction of the edge portion 51. The extension lengths of the plurality of first tab coupling portions 52 may be substantially equal to each other. The first tab coupling portion 52 may be coupled to the first electrode tab 11 by welding, for example.

The terminal coupling portion 53 may be disposed to be surrounded by the plurality of first tab coupling portions 52. The terminal coupling portion 53 may be coupled to the cell terminal 40 by the terminal fastening member 60. The bridge portion 54 may be positioned between a pair of first tab coupling portions 52 adjacent to each other. In this case, the distance from the bridge portion 54 to any one of the pair of first tab coupling portions 52 along the extending direction of the edge portion 51 may be substantially the same as the distance to the other first tab coupling portion 52. The plurality of first tab coupling portions 52 may have substantially the same cross-sectional area. The plurality of first tab coupling portions 52 may have substantially the same width and thickness.

Although not shown in the drawings, the bridge portion 54 may be provided in plurality. In this case, each of the plurality of bridge portions 54 may be disposed between a pair of first tab coupling portions 52 adjacent to each other. The plurality of bridge portion 54 may be disposed at substantially equal intervals from each other along the extending direction of the edge portion 51. The distance from each of the plurality of bridge portions 54 to any one of the pair of first tab coupling portions 52 adjacent to each other along the extending direction of the edge portion 51 may be substantially equal to the distance to the other first tab coupling portion 52.

In the case where the first tab coupling portion 52 and/or the bridge portion 54 is provided in plurality, if the distance between the first tab coupling portions 52 and/or the distance between the bridge portions 54 and/or the distance between the first tab coupling portion 52 and the bridge portion 54 is constant, current may smoothly flow from the first tab coupling portion 52 toward the bridge portion 54 or from the bridge portion 54 toward the first tab coupling portion 52.

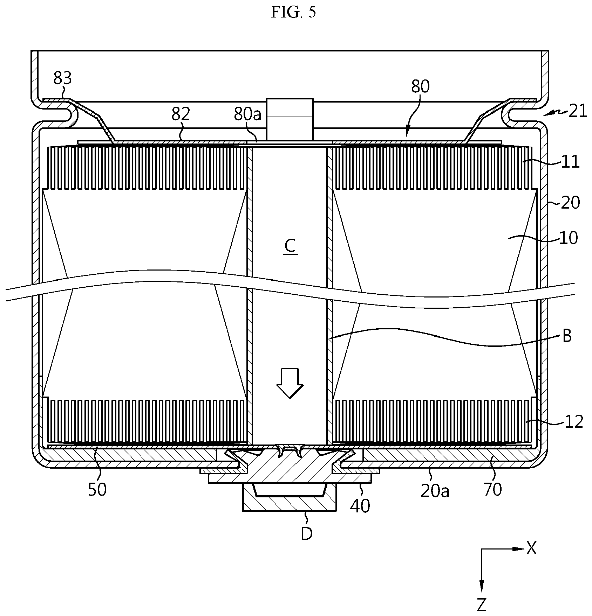

Referring to FIGS. 4 and 5, the terminal fastening member 60 couples the cell terminal 40 and the first current collecting plate 50. That is, in the present disclosure, the cell terminal 40 and the first current collecting plate 50 may be coupled by a mechanical fastening method using a separate member for fastening, rather than welding. When welding is applied to couple the cell terminal 40 and the first current collecting plate 50, welding spatter (in the case of laser welding) or splash may be generated, causing metal foreign matter to flow into the electrode assembly 10. Metal foreign matter may cause an internal short circuit while moving along with the electrolyte when the electrolyte is injected. Therefore, in the present disclosure, a mechanical fastening method may be applied to couple the cell terminal 40 and the first current collecting plate 50, thereby solving this problem.

In particular, in the cylindrical battery cell 1 according to the present disclosure, the cell terminal 40 is located at the closed portion of the battery can 20, and accordingly, the process for coupling the cell terminal 40 and the first current collecting plate 50 must be performed through the winding center hole C of the electrode assembly 10 along the arrow direction in FIG. 5. When welding is applied to couple the cell terminal 40 and the first current collecting plate 50, the separator constituting the inner wall of the winding center hole C may be damaged due to metal foreign matter caused by welding spatter or splash inside the winding center hole C. Therefore, when considering this structure of the cylindrical battery cell 1 of the present disclosure, it is significantly meaningful to apply a mechanical fastening method to couple the cell terminal 40 and the first current collecting plate 50. The terminal fastening member 60 may couple the cell terminal 40 and the first current collecting plate 50 by, for example, a self-piercing rivet (SPR) method. The terminal fastening member 60 may be press-fitted into the first current collecting plate 50 and the cell terminal 40 to fasten the cell terminal 40 and the first current collecting plate 50. The terminal fastening member 60 may include a base portion 61 and a fastening portion 62. The base portion 61 may be disposed substantially parallel to the first current collecting plate 50. The fastening portion 62 may extend from the base portion 61 toward the first current collecting plate 50 and be press-fitted into the first current collecting plate 50 and the cell terminal 40 from the surface of the first current collecting plate 50. More specifically, the fastening portion 62 may be press-fitted into the lower surface of the terminal coupling portion 53 provided to the first current collecting plate 50 (the surface facing the inside of the winding center hole C among both surfaces of the terminal coupling portion 53) and the bottom surface of the cell terminal 40.

The terminal coupling portion 53 of the first current collecting plate 50 may dig inward through the bottom surface of the cell terminal 40 during the press-fitting process, whereby the first current collecting plate 50 may come into close contact with the cell terminal 40 while maximizing the contact area with the cell terminal 40. The fastening portion 62 of the terminal fastening member 60 may penetrate the terminal coupling portion 53 at a position press-fitted from the bottom surface of the cell terminal 40 by a predetermined depth. Of course, unlike this, the fastening portion 62 of the terminal fastening member 60 may not penetrate the first current collecting plate 50 to a maximum press-in depth.

The fastening portion 62 may be configured to form a space therein, and may have a sidewall shape that continuously or discontinuously surrounds the empty space. At least a part of the first current collecting plate 50 may be indented toward the inside of the cell terminal 40 from the bottom surface of the cell terminal 40 according to the press-fitting of the fastening portion 62 at the outer side and the inner side the fastening portion 62. In a state where the terminal fastening member 60 is completely press-fitted, the first current collecting plate 50 may come into contact with both the base portion 61 and the fastening portion 62 at the outer side of the fastening portion 62, and may also come into contact with both the base portion 61 and the fastening portion 62 within the space formed inside the fastening portion 62. As described above, the terminal fastening member 60 is inserted through the winding center hole C of the electrode assembly 10 to couple the first electrode current collecting plate 50 and the cell terminal 40. In addition, it is preferable that a blank holder B for guiding the insertion of the terminal fastening member 60 and protecting the separator constituting the inner wall of the winding center hole C is inserted first into the winding center hole C. Therefore, the maximum diameter or maximum width of the terminal fastening member 60 must be smaller than the diameter of the winding center hole C of the electrode assembly 10.

The terminal fastening member 60 may be made of boron steel to which a small amount of boron is added in a range of about 0.001 wt% to 0.008 wt%. The boron steel has excellent wear resistance due to very high hardness. The inventors of this application have checked that, in the case where the cell terminal 40 and the first current collecting plate 50 made of aluminum are fastened by the self-piercing rivet (SPR) method using the terminal fastening member 60 made of boron steel (the example) and the case where they are fastened by laser welding (the comparative example), the resistance measured between the bottom surface of the terminal fastening member 60 and the top surface of the cell terminal 40 (approximately 0.12 to 0.22 milliohms) is lower than or at a similar level to the resistance measured between the first tab coupling portion 52 of the first current collecting plate 50 and the top surface of the cell terminal 40 (approximately 0.2 milliohms).

For the SPR fastening test, an aluminum plate with a thickness of 3 mm (Element 1 corresponding to the cell terminal 40), an aluminum plate with a thickness of 0.2 mm (Element 2 corresponding to the first current collecting plate 50), and a rivet made of boron steel (Element 3 corresponding to the terminal fastening member 60) were prepared. After placing Element 2 on the top and placing Element 1 on the bottom, Element 3 was introduced into the SPR facility, and samples were prepared by applying a clamping pressure of 15 N to 25 N and jigs having three different shapes (Examples 1 to 6 (→ Examples 1 to 3)).

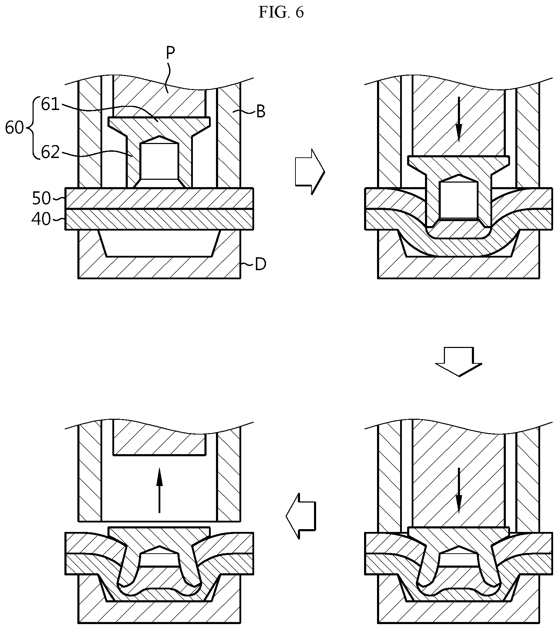

FIG 6 illustrates a process for the preparation of the samples. The SPR process for manufacturing the samples was performed using the first aluminum plate serving as the cell terminal 40 and the second aluminum plate serving as the first current collecting plate 50. In a state where the first aluminum plate and the second aluminum plate were placed to overlap each other, the lower portion of the first aluminum plate was supported by a jig D, and press-fitting was performed from the upper portion of the second aluminum plate using a press-fitting member made of boron steel, serving as the terminal fastening member 60. The press-fitting using the press-fitting member was performed in a way of putting the press-fitting member into a blank holder B and pressing the press-fitting member downward using a punch P from the upper portion of the press-fitting member.

### (Example 1 (→ Examples 1 to 3))

In Examples 1 to 3, for the SPR fastening test, an aluminum plate with a thickness of 3 mm (Element 1 corresponding to the cell terminal 40), an aluminum plate with a thickness of 0.2 mm (Element 2 corresponding to the first current collecting plate 50), and a rivet made of boron steel (Element 3 corresponding to the terminal fastening member 60) were prepared. After placing Element 2 on the top and placing Element 1 on the bottom, Element 3 was introduced into the SPR facility, and samples were prepared by applying a clamping pressure of 15 N to 25 N and jigs having three different shapes.

### (Comparative Examples 1 to 4)

In Comparative Examples 1 to 3, the same conditions as in Examples 1 to 3 were applied, respectively, except that NiCu-coated boron steel was applied as Element 3.

In Comparative Example 4, the laser welding method was applied instead of the SPR method for coupling Element 1 and Element 2 as described above.

### (Resistance Test)

In each experimental example, the resistance between the surface of the aluminum plate (Element 1) corresponding to the cell terminal 40 and the surface of the aluminum plate (Element 2) corresponding to the first current collecting plate 50 was measured. Resistance was measured using a microresistance meter of Hioki. As a result of the resistance measurement, 0.125 ± 0.008 mQ was measured in Example 1, 0.134 ± 0.025 mΩ was measured in Example 2, and 0.221 ± 0.047 mQ was measured in Example 3.

Meanwhile, 0.159 ± 0.018 mQ was measured in Comparative Example 1, 0.134 ± 0.008 mΩ was measured in Comparative Example 2, and 0.203 ± 0.038 mS2 was measured in Comparative Example 3. In addition, in Comparative Example 4, resistance of about 0.2 mΩ level was measured as mentioned above.

Seeing the above experimental results, it may be found that the resistance value in the case where the mechanical fastening method of the present disclosure is applied is smaller than or at a similar level that in the case where laser welding is applied in coupling the cell terminal 40 and the first current collecting plate 50. Therefore, it may be found that it may be more advantageous to employ the mechanical fastening method of the present disclosure in view of problems caused by metal foreign matter that may be generated during welding (from the comparison between Examples 1 to 3 and Comparative Example 4). Meanwhile, it may be found that the resistance value in the case of Comparative Examples 1 to 3 in which the terminal fastening member 60 having a NiCu coating layer formed on the surface of the terminal fastening member 60 made of boron steel is applied is relatively greater than that in the case of Examples 1 to 3 in which the terminal fastening member 60 made of boron steel is applied. Therefore, in view of the material of the terminal fastening member 60, it may be regarded that it is preferable to use a boron steel material.

Referring to FIGS. 3 and 4, the insulator 70 is provided between the first current collecting plate 50 coupled to the upper portion of the electrode assembly 10 and the inner surface of the closed portion of the battery can 20. The insulator 70 prevents contact between the first current collecting plate 50 and the battery can 20. The insulator 70 may also be interposed between a top end of the outer circumferential surface of the electrode assembly 10 and the sidewall of the battery can 20. That is, the insulator 70 may also be interposed between the first electrode tab 11 and the inner surface of the sidewall of the battery can 20.

If the cylindrical battery cell 1 according to an embodiment of the present disclosure includes the insulator 70, the terminal insert portion 42 of the cell terminal 40 is coupled to the terminal coupling portion 53 of the first current collecting plate 50 through the insulator 70. The hole formed in the insulator 70 may be formed at a location corresponding to the winding center hole C of the electrode assembly 10. In addition, the hole formed in the insulator 70 may be formed at a location corresponding to the terminal coupling portion 53 of the first current collecting plate 50.

The insulator 70 may have a thickness corresponding to the distance between the inner surface of the closed portion of the battery can 20 and the first current collecting plate 50 by filling the space between the inner surface of the closed portion of the battery can 20 and the first current collecting plate 50 along the height direction so that a space where the electrode assembly 10 can move is not generated. In another aspect, the upper surface of the insulator 70 may be in contact with the inner surface of the closed portion of the battery can 20, and the lower surface of the insulator 70 may be in contact with the upper surface of the first current collecting plate 50.

Referring to FIG. 8, the second current collecting plate 80 is disposed below the electrode assembly 10. In addition, the second current collecting plate 80 may be configured to electrically connect the second electrode tab 12 of the electrode assembly 10 and the battery can 20. The second current collecting plate 80 is made of a metal material with conductivity and is connected to the second electrode tab 12. In addition, the second current collecting plate 80 is electrically connected to the battery can 20. The second current collecting plate 80 may be interposed and fixed between the inner surface of the battery can 20 and the sealing gasket G2. The second current collecting plate 80 may be, for example, interposed between the lower surface of the beading portion 21 provided to the battery can 20 and the sealing gasket G2.

The second current collecting plate 80 is coupled to an end of the second electrode tab 12. The coupling between the second electrode tab 12 and the second current collecting plate 80 may be performed, for example, by laser welding. The laser welding may be performed by partially melting a base material of the second current collecting plate 80, or may be performed in a state where a solder for welding is interposed between the second current collecting plate 80 and the second electrode tab 12. In this case, the solder preferably has a lower melting point than the second current collecting plate 80 and the second electrode tab 12.

The second current collecting plate 80 may be coupled to a coupling surface of the second electrode tab 12, which is formed by bending an end of the second electrode tab 12 in a direction parallel to the second current collecting plate 80. The second electrode tab 12 may be bent along the radial direction of the electrode assembly 10. The bending direction of the second electrode tab 12 may be, for example, a direction toward the core of the electrode assembly 10. If the second electrode tab 12 has a bent shape as above, the space occupied by the second electrode tab 12 may be reduced, thereby improving energy density. In addition, if the second electrode tab 12 has a bent shape as above, as the coupling area between the second electrode tab 12 and the second current collecting plate 80 increases, the coupling force may be improved and the resistance may be reduced. Meanwhile, in the case where the end of the second electrode tab 12 has a bent shape and the second current collecting plate 80 is coupled to the coupling surface formed by bending the second electrode tab 12, it is advantageous that the second current collecting plate 80 and the second electrode tab 12 are coupled within the stack number uniform region as described above.

The second current collecting plate 80 may include a current collecting plate hole 80a formed at a position corresponding to the winding center hole C formed in the core of the electrode assembly 10. The winding center hole C of the electrode assembly 10 and the current collecting plate hole 80a communicating with each other may function as a passage for inserting the terminal fastening member 60 to couple the cell terminal 40 and the terminal coupling portion 53 of the first current collecting plate 50 and for inserting a tool for press-fitting the terminal fastening member 60 into the first current collecting plate 50 and the cell terminal 40. Considering this function, the current collecting plate hole 80a may have a diameter substantially equal to or greater than that of the hole formed in the winding center of the electrode assembly 10. The current collecting plate hole 80a may be used as a passage for injection of an electrolyte.

The can coupling portion 83 may be electrically coupled to the battery can 20 at a plurality of points. In this case, the coupling area between the second current collecting plate 80 and the battery can 20 may be maximized, and the current path may be multiplexed, whereby the electrical resistance may be minimized at the coupling portion between the second current collecting plate 80 and the battery can 20. The can coupling portion 83 may be coupled to the lower surface of the beading portion 21, for example.

More specifically, the can coupling portion 83 may be electrically coupled to the flat portion formed at the lower surface of the beading portion 21 formed on the battery can 20, and may be interposed between the lower surface of the beading portion 21 and the sealing gasket G2. In this case, for stable contact and coupling, the can coupling portion 83 may have a shape extending from the beading portion 21 by a predetermined length along the circumferential direction of the battery can 20.

Meanwhile, the length obtained by multiplying 2 by the maximum distance from the center of the second current collecting plate 80 to the end of the second tab coupling portion 82 along the radial direction of the electrode assembly 10 is preferably substantially equal to or smaller than the inner diameter of the battery can 20 in a region where the beading portion 21 is formed, namely the minimum inner diameter of the battery can 20. This is to prevent interference from occurring between the second current collecting plates 80 by the beading portion 21 during the sizing process for compressing the battery can 20 along the height direction (parallel to the Z-axis), and thus to prevent the electrode assembly 10 from being pressed by the second current collecting plate 80.

Meanwhile, the cylindrical battery cell 1 according to an embodiment of the present disclosure has a structure in which the cap plate 30 does not necessarily have polarity, as described above. When the cap plate 30 has no polarity, the second current collecting plate 80 is connected to the sidewall of the battery can 20, and thus the outer surface 20a of the closed portion of the battery can 20 has a polarity opposite to the cell terminal 40. Therefore, when a plurality of cylindrical battery cells 1 are to be connected in series and/or in parallel, the wiring work such as connecting a bus bar may be formed at the upper portion of the cylindrical battery cell 1 using the cell terminal 40 and the outer surface 20a of the closed portion of the battery can 20. Through this, energy density may be improved by increasing the number of cylindrical battery cells 1 that can be mounted in the same space, and electrical wiring may be easily performed. That is, in the cylindrical battery cell 1 according to the present disclosure, the cell terminal 40 exposed out of the battery can 20 may function as a first electrode terminal, and the region of the outer surface 20a of the closed portion of the battery can 20 occupied by the exposed surface approximately parallel to the upper surface of the first electrode terminal may function as a second electrode terminal. Accordingly, when the plurality of cylindrical battery cells 1 are to be electrically connected, a first bus bar may be coupled to the upper surface of the cell terminal 40 exposed out of the battery can 20, and a second bus bar may be coupled to the region of the outer surface 20a of the closed portion of the battery can 20 occupied by the exposed surface approximately parallel to the upper surface of the first electrode terminal.

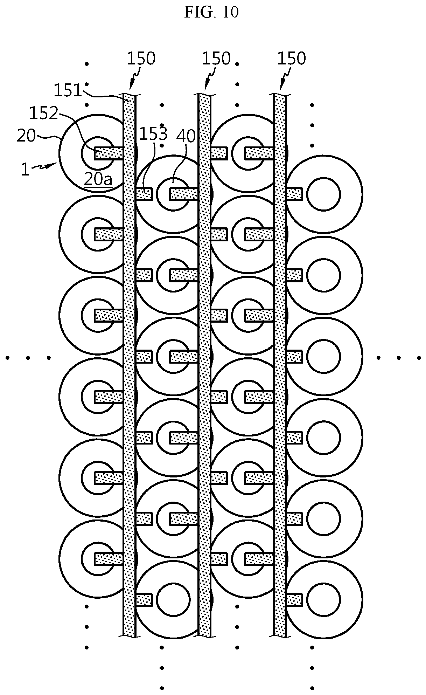

Referring to FIG. 10, a plurality of cylindrical battery cells 1 may be connected in series and in parallel at an upper portion of the cylindrical battery cells 1 using a bus bar 150. The number of cylindrical battery cells 1 may be increased or decreased in consideration of the capacity of the battery pack.

In each cylindrical battery cell 1, the cell terminal 40 may have a positive polarity and the outer surface 20a of the closed portion of the battery can 20 may have a negative polarity, or vice versa.

Preferably, the plurality of cylindrical battery cells 1 may be arranged in a plurality of columns and rows. Columns are provided in a vertical direction based on FIG. 10, and rows are provided in a left and right direction based on FIG. 10. In addition, in order to maximize space efficiency, the cylindrical battery cells 1 may be arranged in a closest packing structure. The closest packing structure is formed when an equilateral triangle is formed by connecting the centers of the terminal exposing portions 41 of the cell terminal 40 exposed out of the battery can 20 to each other. Preferably, the bus bar 150 may be disposed on the plurality of cylindrical battery cells 1, more preferably between neighboring rows. Alternatively, the bus bar 150 may be disposed between neighboring rows.

For example, the bus bar 150 may connect the cylindrical battery cells 1 arranged in the same column in parallel to each other, and connect the cylindrical battery cells 1 arranged in two neighboring columns in series with each other.

The bus bar 150 may include a body portion 151, a plurality of first bus bar terminals 152 and a plurality of second bus bar terminals 153 for serial and parallel connection.

The body portion 151 may extend between cell terminals 40 of neighboring cylindrical battery cells 70, preferably between rows of the cylindrical battery cells 1. Alternatively, the body portion 151 may extend along the row of the cylindrical battery cells 1 and may be regularly bent like a zigzag shape.

The plurality of first bus bar terminals 152 may protrusively extend from one side of the body portion 151 toward the cell terminal 40 of each cylindrical battery cell 1 and may be electrically coupled to the cell terminal 40. The electrical connection between the first bus bar terminal 152 and the cell terminal 40 may be accomplished by laser welding, ultrasonic welding, or the like. Also, the plurality of second bus bar terminals 153 may be electrically coupled to the outer surface 20a of each cylindrical battery cell 1 from the other side of the body portion 151. The electrical connection between the second bus bar terminal 153 and the outer surface 20a may be achieved by laser welding, ultrasonic welding, or the like.

Preferably, the body portion 151, the plurality of first bus bar terminals 152 and the plurality of second bus bar terminals 153 may be made of one conductive metal plate. The metal plate may be, for example, an aluminum plate or a copper plate, but the present disclosure is not limited thereto. In a modified example, the body portion 151, the plurality of first bus bar terminals 152 and the second bus bar terminals 153 may be manufactured as separate pieces and then coupled to each other by welding or the like.

In the cylindrical battery cell 1 according to the present disclosure, since the cell terminal 40 having a positive polarity and the outer surface 20a of the closed portion of the battery can 20 having a negative polarity are located in the same direction, the cylindrical battery cells 1 may be electrically connected easily using the bus bar 150.

In addition, since the cell terminal 40 of the cylindrical battery cell 1 and the outer surface 20a of the closed portion of the battery can 20 have large areas, the coupling area of the bus bar 150 may be sufficiently secured to sufficiently lower the resistance of the battery pack including the cylindrical battery cell 1.

Preferably, the cylindrical battery cell may be, for example, a cylindrical battery cell whose form factor ratio (defined as a value obtained by dividing the diameter of the cylindrical battery cell by height, namely a ratio of height (H) to diameter (Φ)) is greater than about 0.4.

Here, the form factor means a value indicating the diameter and height of a cylindrical battery cell. The cylindrical battery cell according to an embodiment of the present disclosure may be, for example, a 46110 cell, a 48750 cell, a 48110 cell, a 48800 cell, or a 46800 cell. In the numerical value representing the form factor, first two numbers indicate the diameter of the cell, next two numbers indicate the height of the cell, and the last number "0" indicates that the cross-section of the cell is circular.

A battery cell according to an embodiment of the present disclosure may be a cylindrical battery cell having an approximately cylindrical shape, whose diameter is approximately 46 mm, height is approximately 110 mm, and form factor ratio is 0.418.

A battery cell according to another embodiment may be a cylindrical battery cell having a substantially cylindrical shape, whose diameter is about 48 mm, height is about 75 mm, and form factor ratio is 0.640.

A battery cell according to still another embodiment may be a cylindrical battery cell having an approximately cylindrical shape, whose diameter is approximately 48 mm, height is approximately 110 mm, and form factor ratio is 0.418.

A battery cell according to still another embodiment may be a cylindrical battery cell having an approximately cylindrical shape, whose diameter is approximately 48 mm, height is approximately 80 mm, and form factor ratio is 0.600.

A battery cell according to still another embodiment may be a cylindrical battery cell having an approximately cylindrical shape, whose diameter is approximately 46 mm, height is approximately 80 mm, and form factor ratio is 0.575.

Conventionally, battery cells having a form factor ratio of about 0.4 or less have been used. That is, conventionally, for example, 18650 cell, 21700 cell, etc. were used. The 18650 cell has a diameter of approximately 18 mm, height of approximately 65 mm, and a form factor ratio of 0.277. The 21700 cell has a diameter of approximately 21 mm, a height of approximately 70 mm, and a form factor ratio of 0.300.

As described above, the cylindrical battery cell 1 of the present disclosure has a structure in which resistance is minimized by expanding a contact area between components, multiplexing current path, minimizing a current path length, and the like. After the product is finally manufactured, the AC resistance of the cylindrical battery cell 1 measured using a resistance measuring instrument between the positive electrode and the negative electrode, namely between the upper surface of the cell terminal 40 and the outer surface 20a of the closed portion of the battery can 20, may be about 4 milliohms (mohm) or less.

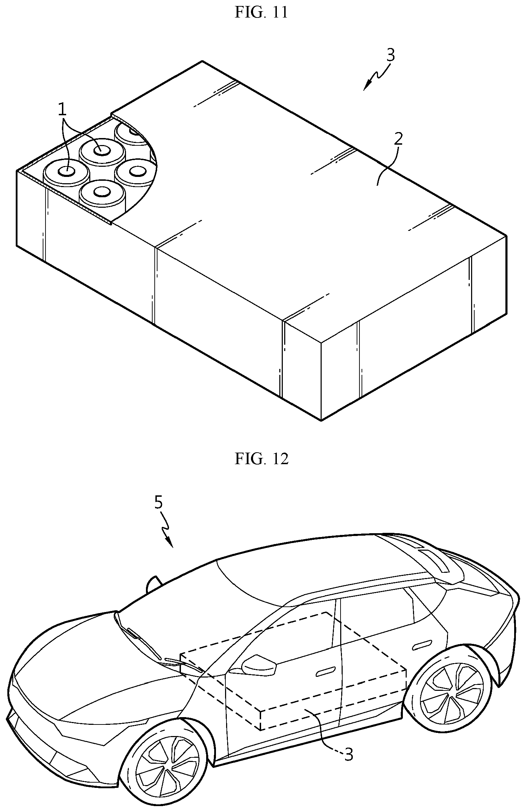

Referring to FIG. 11, a battery pack 3 according to an embodiment of the present disclosure includes a secondary battery assembly in which a plurality of cylindrical battery cells 1 according to an embodiment of the present disclosure as described above are electrically connected, and a pack housing 2 for accommodating the secondary battery assembly. In FIG. 11 of the present disclosure, components for electrical connection such as a bus bar, a cooling unit and a power terminal are not depicted for convenience of illustration. The electrical connection structure of the plurality of battery cells 1 for manufacturing the battery pack 3 has been exemplarily described above with reference to FIG. 10.

Referring to FIG. 12, a vehicle 5 according to an embodiment of the present disclosure may be, for example, an electric vehicle, a hybrid electric vehicle or a plug-in vehicle, and includes the battery pack 3 according to an embodiment of the present disclosure. The vehicle 5 operates by receiving a power from the battery pack 3 according to an embodiment of the present disclosure.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

### Reference Signs

5: vehicle
3: battery pack
2: pack housing
1: cylindrical battery cell
150: bus bar
151: body portion
152: first bus bar terminal
153: second bus bar terminal
10: electrode assembly
C: winding center hole (core hole)
11: first electrode tab (first uncoated portion)
11a: segment
12: second electrode tab (second uncoated portion)
20: battery can
20a: outer surface of the closed portion (second electrode terminal)
21: beading portion
22: crimping portion
30: cap plate
31: venting portion
40: cell terminal (first electrode terminal)
41: terminal exposing portion
42: terminal insert portion
42a: electric connection portion
42b: flange portion
G1: insulation gasket
G1A: gasket exposing portion
G1B: gasket insert portion
50: first current collecting plate
51: edge portion
52: first tab coupling portion
53: terminal coupling portion
54: bridge portion
N: current blocking portion
60: terminal fastening member
61: base portion
62: fastening portion
70: insulator
80: second current collecting plate
80a: current collecting plate hole
82: second tab coupling portion
83: can coupling portion
H: injection hole
W: welding pattern
G2: sealing gasket

## Claims

1. A cylindrical battery cell, comprising:
an electrode assembly having a first electrode tab with a first polarity and a second electrode tab with a second polarity;
a battery can having an open portion formed at a lower end and a closed portion formed at an upper end, configured to accommodate the electrode assembly through the open portion, and electrically connected to the second electrode tab;
a cell terminal electrically connected to the first electrode tab, exposed to the outside of the battery can through the closed portion of the battery can, and electrically insulated from the battery can;
a first current collecting plate having a first surface and a second surface opposite to the first surface, wherein the first surface is coupled to the first electrode tab and the second surface is coupled to the cell terminal; and
a terminal fastening member configured to mechanically fasten the cell terminal and the first current collecting plate.

2. The cylindrical battery cell according to claim 1,
wherein the terminal fastening member is press-fitted into the first current collecting plate and the cell terminal to fasten the cell terminal and the first current collecting plate.

3. The cylindrical battery cell according to claim 1,
wherein the terminal fastening member includes:
a base portion; and
a fastening portion that extends from the base portion toward the first current collecting plate and is press-fitted from the surface of the first current collecting plate into the first current collecting plate and the cell terminal.

4. The cylindrical battery cell according to claim 1,
wherein the cell terminal and the first current collecting plate contain aluminum.

5. The cylindrical battery cell according to claim 4,
wherein the terminal fastening member includes boron steel containing 0.001 wt% to 0.008 wt% of boron.

6. The cylindrical battery cell according to claim 3,
wherein at least a part of the first current collecting plate is indented toward the inside of the cell terminal according to the press-fitting of the fastening portion at an outer side of the fastening portion and an inner side of the fastening portion.

7. The cylindrical battery cell according to claim 1,
wherein a maximum diameter or maximum width of the terminal fastening member is smaller than a diameter of a winding center hole of the electrode assembly.

8. The cylindrical battery cell according to claim 1, further comprising:
a cap plate configured to seal the open portion of the battery can.

9. The cylindrical battery cell according to claim 8,
wherein the cap plate is not electrically connected to the electrode assembly to have no polarity.

10. The cylindrical battery cell according to claim 1, further comprising:
a second current collecting plate configured to electrically connect the second electrode tab and the battery can.

11. The cylindrical battery cell according to claim 10,
wherein the second current collecting plate includes:
a tab coupling portion coupled to the second electrode tab; and
a can coupling portion electrically coupled to the battery can.

12. The cylindrical battery cell according to claim 11,
wherein the can coupling portion is electrically coupled to an inner surface of a sidewall of the battery can.

13. The cylindrical battery cell according to claim 12,
wherein the battery can has a beading portion formed by press-fitting a periphery of an outer circumference of the battery can at the open portion, and
the can coupling portion is electrically coupled to a lower surface of the beading portion.

14. A battery pack, comprising a plurality of cylindrical battery cells according to any one of claims 1 to 13.

15. A vehicle, comprising the battery pack according to claim 14.
